# NEUE EUROPÄISCHE PATENTSCHRIFT

(11) **EP 1 334 853 B2**
(45) Veröffentlichungstag und Bekanntmachung des Hinweises auf die Entscheidung über den Einspruch: **20.04.2011**
(45) Hinweis auf die Patenterteilung: 08.06.2005
(21) Anmeldenummer: 02025975.0
(22) Anmeldetag: 21.11.2002
(51) Int. Cl.: B60H 1/22, F16K 11/07, B60H 1/00

(54) **Temperaturgesteuertes Kraftstoffventil für einen kraftstoffbetriebenen Heizbrenner eines Fahrzeugheizsystems**
Temperature controlled fuel valve for a fuel combustion type heater for a vehicle heating system
Soupape à régulation thermique pour brûleur à essence d'un système de chauffage de véhicule

(30) Priorität: 12.02.2002 DE 10205708
(43) Veröffentlichungstag der Anmeldung: 13.08.2003
(73) Patentinhaber: J. Eberspächer GmbH & Co. KG, 73730 Esslingen (DE)
(72) Erfinder: Bauer, Thomas, 72555 Metzingen (DE); Blaschke, Walter, 73779 Deizisau (DE)
(74) Vertreter: Ruttensperger, Bernhard

(56) Entgegenhaltungen:
- DE-A- 10 058 516
- DE-A1- 19 545 677
- US-A- 3 841 551
- US-A- 4 142 675
- US-A- 4 285 467
- US-A- 4 437 830
- US-A- 4 450 868
- PATENT ABSTRACTS OF JAPAN vol. 1999, no. 01, 29. Januar 1999 (1999-01-29) & JP 10 278558 A (NIPPON SOKEN INC;DENSO CORP), 20. Oktober 1998 (1998-10-20)

## Beschreibung

Die vorliegende Erfindung betrifft ein temperaturgesteuertes Kraftstoffventil für einen kraftstoffbetriebenen Heizbrenner eines Fahrzeugheizsystems.

Aus der US 4,437,830 ist ein Steuerventil für einen Brenner mit zugeordnetem Sicherheitssteuersystem bekannt. Das Steuerventil umfasst zwei Ventilelemente, die durch diesen jeweils zugeordnete Vorspannfedern In eine Positionierung vorgespannt sind, in welcher sie auf einem zugeordneten Ventilsitz aufsitzen. Zum Starten der Verbrennung wird eines der Ventileleiemente durch manuelle Betätigung in eine Positionierung gebracht, in welcher es vom zugeordneten Ventilsitz abgehoben ist. Es ist dann eine Strömungsverbindung von einer Gaszufuhr zu einer Gasableitung geschaffen, die zu einem Steuerbrenner führt. Das In eine Freigabestellung bewegte Ventilelelement wird durch einen Verriegelungsmechanismus in dieser Freigabestellung gehalten. Nach Erfassung der im Bereich des Steuerbrenners startenden bzw. ablaufenden Verbrennung wird auch das zweite Ventilelement von seinem Ventilsitz abgehoben, so dass zusätzlich zur Gaszufuhr zum Steuerbrenner auch eine Gaszufuhr zu dem Hauptbrenner erfolgen kann. Bei ablaufender Verbrennung bleiben dann die beiden Ventilelemente jeweils In der vom zugeordneten Ventilsitz abgehobenen Positionierung, wobei durch das Bewegen des die Zufuhr zum Hauptbrenner freigebenden Ventilelelements in Richtung zu seiner Freigabestellung der Verriegelungsmechanismus für das andere Ventilelement gelöst wird und dieses andere Ventilelement zunächst nur durch das temperaturabhängig wirksame Ventilelement in seiner Freigabestellung gehalten wird. Kommt die Verbrennung zum Erliegen, so bewegen sich beide Ventilelemente federvorgespannt in diejenige Positionierung, in welcher sie auf dem zugeordneten Ventilsitz aufsitzen.

Die US 4,450,868 offenbart einen Frostschutzmechanismus für Solarkollektoren. Dieser Mechanismus umfasst ein Ventil, welches im normalen Heizbetrieb der Solarkollektoren dafür sorgt, dass das Heizmedium, im Allgemeinen Wasser, durch die Solarkollektoren zirkulieren kann. Zu diesem Zwecke wird eine Verbindung von einer von einem Tank her führenden Zuleitung zu einer zu den Solarbcollektoren führenden Ableitung geschaffen. Gleichzeitig ist eine Leitungsverbindung zwischen einer von den Solarkollektoren weg führenden Ableitung zu dem Tank vorhanden. Fällt die Temperatur in einen Bereich, in welchem die Gefahr des Gefrierens des Wassers besteht, wird eine Drainageleitung in Verbindung gebracht mit der zu den Solarkollektoren führenden Leitung und der von den Solarkoliektoren weg führenden Leitung, so dass das gesamte Leitungssystem im Bereich der Solarkollektoren und somit auch die Solarkollektoren selbst entwässert werden können. Die Verbindung mit der vom Tank herführenden Zuleitung ist In dieser Phase unterbrochen. Soll das System wieder In Betrieb gesetzt werden, wird die Verbindung der von dem Tank herführenden Zuleitung mit der zu den Solarkollektoren führenden Ableitung wieder hergestellt, wobei eine Übergangsphase existiert, in welcher auch eine Verbindung zwischen der Zuleitung und der von den Solarkollektoren weg führenden Ableitung besteht, so dass das Gesamtsystem schneller befüllt werden kann.

Bei in Fahrzeugen eingesetzten Heizgeräten, welche beispielsweise als Standheizungen oder als Zuheizer betrieben werden können, wird im Allgemeinen der Kraftstoff von einem Kraftstofftank über eine Saugleitung in einer Dosierpumpe aufgenommen und von dieser unter Druck dann über eine Druckleitung in die Brennkammer des Heizbrenners eingeleitet. Um am Anfang einer Betriebsphase den in die Brennkammer beispielsweise durch Verdampfung oder Zerstäubung eingeleiteten Brennstoff zusammen mit der ebenfalls eingeleiteten Verbrennungsluft zu zünden, ist ein beispielsweise in Form eines Glühzündstifts ausgebildetes Zündorgan vorgesehen.

Im Betrieb derartiger Systeme ergibt sich das Problem, dass beim Abschalten im Leitungsbereich zwischen der Dosierpumpe und der Brennkämmer zunächst noch Brennstoff vorhanden ist, der bei eingestellter Zündung zumindest noch in dem der Brennkammer nahen Bereich der Druckleitung ausdampft und somit zu gesundheitsschädlichen Emissionen führt. Während des Betriebs führt eine im Allgemeinen unsymmetrische Einspeisung des Kraftstoffs in die Brennkammer zu einer nicht gleichmäßig über die Brennkammer verteilten Verbrennung mit der Folge, dass nicht in allen Bereichen der Brennkammer die Verbrennung im optimalen Lambdabereich stattfindet, was zu Ablagerungen führen kann.

Es ist die Aufgabe der vorliegenden Erfindung, ein gattungsgemäßes Ventil derart weiterzubilden, dass es einen vereinfachten Aufbau hat und dass es als Kraftstoffventil zur Verbesserung der Verbrennungsqualität in einem Heizbrenner beitragen kann.

Gemäß der vorliegenden Erfindung wird diese Aufgabe gelöst durch die Merkmale in Anspruch 1.

Das definierte Umschalten zwischen verschiedenen Strömungswegen durch das erfindungsgemäße Kraftstoffventil kann beispielsweise dadurch erlangt werden, dass das Ventilorgan eine erste Ventilorganfläche und eine der ersten Ventilorganfläche entgegengesetzt gerichtete zweite Ventilorganfläche aufweist und dass in dem Ventilkörper für die erste Ventilorganfläche und die zweite Ventilorganfläche eine erste Ventilsitzfläche bzw. eine zweite Ventilsitzfläche vorgesehen sind, wobei der erste Str6mungswegbereich in die erste Ventilsitzfläche einmündet und der zweite Strömungswegbereich in die zweite Ventilsitzfläche einmündet, wobei dann vorzugsweise weiter vorgesehen sein kann, dass bei auf der ersten Ventilsitzfläche aufsitzender erster Ventilorganfläche die zweite Ventilorganfläche nicht auf der zweiten Ventlisitzfläche aufsitzt.

Zur Erfassung der Temperatur und der dementsprechenden Ansteuerung des Ventilorgans kann das erfindungsgemäße Kraftstoffventil ferner eine Temperaturfühleranordnung mit einem Temperaturfühlermedium mit temperaturabhängigem Volumen sowie einer durch Volumenänderung des Temperaturfühlermediums verlagerbaren und das Ventilorgan beaufschlagenden Übertragungsanordnung aufweisen.

Die Umsetzung einer Volumenänderung des Temperaturfühlermediums in eine Beaufschlagungsbewegung für das Ventilorgan kann beispielsweise sehr einfach dadurch erlangt werden, dass die Übertragungsanordnung ein durch Volumenänderung des Temperaturfühlermediums verformbares Abschlusselement und einen durch Abschlusselementenverformung verlagerbaren Stössel umfasst.

Die vorliegende Erfindung betrifft ferner ein Heizsystem, insbesondere für ein Fahrzeug, umfassend einen Heizbrenner mit einer Brennkammer, eine Pumpanordnung zum Fördern von Kraftstoff zur Brennkammer sowie ein erfindungsgemäßes temperaturgesteuertes Kraftstoffventil im Strömungsweg zwischen der Pumpanordnung und der Brennkammer.

Durch das Eingliedern des erfindungsgemäßen Kraftstoffventils in den Bereich zwischen der Dosierpumpe und dem Heizbrenner, vorzugsweise möglichst nahe am Heizbrenner, wird dafür gesorgt, dass der nicht mehr verschließbare Leitungsweg möglichst kurz gehalten wird. Auf diese Art und Weise kann die Menge des bei Einstellung der Verbrennung nicht mehr verbrannten Kraftstoffs, welcher dann auf Grund der noch vergleichsweise hohen Temperaturen zum Abdampfen neigt, deutlich reduziert werden.

Ferner kann vorgesehen sein, dass eine Temperaturfühleranordnung des Kraftstoffventils zum Erfassen einer Temperatur im Bereich eines Zündorgans des Heizbrenners oder im Bereich eines Abgasstroms ausgebildet ist.

Um bei dem erfindungsgemäßen Heizsystem dafür zu sorgen, dass in Abhängigkeit von der Temperatur der Kraftstoff in den für verschiedene Betriebszustände und die dabei jeweils vorliegenden Verbrennungszustände optimalen Bereich eingeleitet wird, wird weiter vorgeschlagen, dass über einen ersten Ableitungsbereich des Kraftstoffventils Kraftstoff in die Brennkammer im Bereich des Zündorgans einleitbar ist und über einen zweiten Ableitungsbereich des Kraftstoffventils Kraftstoff in die Brennkammer in einem vom Zündorgan weiter entfernt liegenden Bereich einleitbar ist.

Eine weitere Erhöhung der Verbrennungsqualität kann dadurch erlangt werden, dass der zweite Ableitungsbereich einen geringeren Strömungswiderstand bereitstellt, als der erste Ableitungsbereich.

Die vorliegende Erfindung wird nachfolgend mit Bezug auf die beiliegenden Zeichnungen anhand bevorzugter Ausgestaltungsformen detailliert beschrieben. Es zeigt:
- Fig. 1: eine Prinzipansicht eines erfindungsgemäßen Heizsystems mit einem temperaturgesteuerten Kraftstoffventil;
- Fig. 2: eine Längsschnittansicht des Kraftstoffventils;
- Fig. 3: eine Querschnittansicht des in Fig. 2 dargestellten Kraftstoffventils, geschnitten längs einer Linie III - III in Fig. 2, wobei das Kraftstoffventil in einem einer niedrigen Temperatur zugeordneten Betriebszustand ist;
- Fig. 4: eine der Fig. 2 entsprechende Ansicht des temperaturgesteuerten Kraftstoffventils in einem Zustand, welcher einer hohen, während der Zündphase vorliegenden Temperatur zugeordnet ist;
- Fig. 5: eine weitere der Fig. 2 entsprechende Ansicht des temperaturgesteuerten Kraftstoffventils in einem Zustand, welcher einer mittleren, während der normalen Verbrennung vorliegenden Temperatur zugeordnet ist.

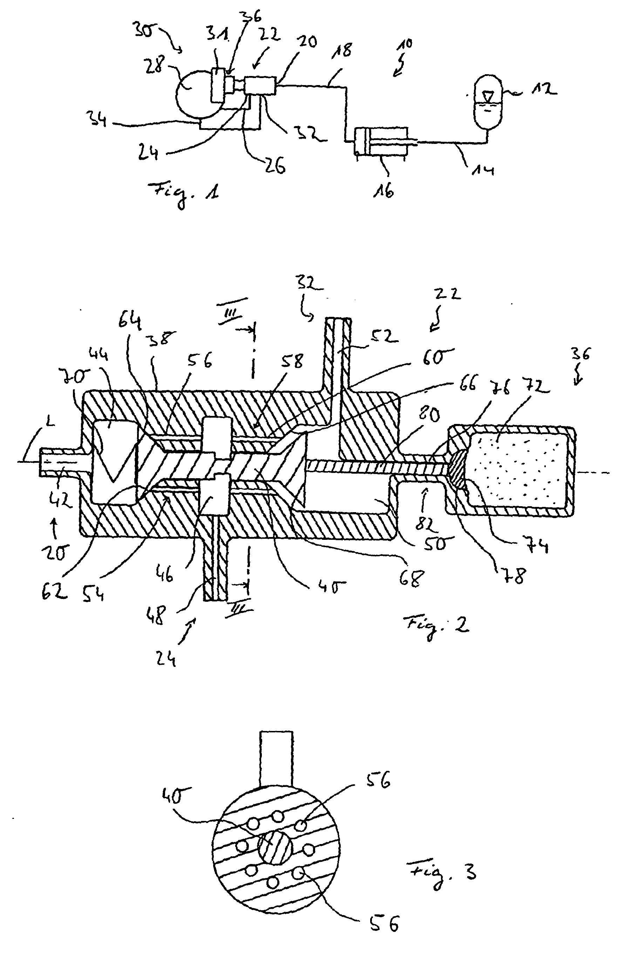

In Fig. 1 ist ein erfindungsgemäßes Heizsystem allgemein mit 10 bezeichnet. Von einem Kraftstofftank 12 führt eine Kraftstoffleitung 14 zu einer Dosierpumpe 16, welche von herkömmlichem Aufbau sein kann. Von der Dosierpumpe 16 führt eine weitere Kraftstoffleitung 18 zu einem Zuleitungsbereich 20 eines temperaturgesteuerten Kraftstoffventils 22. Der unter erhöhtem Druck über die Leitung 18 in das Kraftstoffventil 22 eingeleitete Brennstoff kann über einen ersten Ableitungsbereich 24 und eine weitere Kraftstoffleitung 26 in eine Brennkammer 28 eines Heizbrenners 30 in einem Bereich eingeleitet werden, der nahe einem Glühzündstift oder einem sonstigen Zündorgan 31 liegt. Ferner kann über einen zweiten Ableitungsbereich 32 und eine weitere Leitung 34 Kraftstoff von dem Kraftstoffventil 22 in einen Bereich der Brennkammer 28 eingeleitet werden, welcher von dem Glühzündstift 31 weiter erntfernt liegt. Es sei hier darauf hingewiesen, dass der Heizbrenner 30 ein Zerstäuberbrenner oder ein Verdampferbrenner sein kann. Je nachdem wird der Brennstoff durch Zerstäubung oder durch Abdampfen aus einem porösen Medium in die Brennkammer 28 abgegeben, um dort mit der ebenfalls in die Brennkammer 28 eingeleiteten Verbrennungsluft ein zündfähiges Gemisch zu bilden.

Man erkennt in Fig. 1 ferner eine allgemein mit 36 bezeichnete Temperaturfühleranordnung des Kraftstoffventils 22, welche im dargestellten Beispiel eine Temperatur in der Brennkammer 28 im Bereich des Glühzündstifts 31 erfasst. Je nach Temperatur wird über das Kraftstoffventil 22 der Kraftstoff über beide Ableitungsbereiche 24, 32, über nur einen der Ableitungsbereiche 24, 32 oder über gar keinen der Ableitungsbereiche 24, 32 abgegeben. Dies wird nachfolgend mit Bezug auf die Fig. 2 bis 5 detailliert beschrieben.

Man erkennt zunächst in der Fig. 2 den internen Aufbau des Kraftstoffventils 22. Dieses umfasst einen Ventilkörper 38, in dem ein Ventilschieber 40 in Richtung einer Ventilschieberlängsachse L verschiebbar aufgenommen ist. Eine Einlassöffnung 42 des Zuleitungsbereichs 20 führt in eine erste Ventilkammer 44. In eine zweite Ventilkammer 46, welche in der Richtung der Längsachse L auf die erste Ventilkammer 44 folgt, mündet eine Auslassöffnung 48 des ersten Ableitungsbereichs 24. In eine dritte Ventilkammer 50, welche in der Richtung der Längsachse L auf die erste Ventilkammer 44 und die zweite Ventilkammer 46 folgt, mündet eine Auslassöffnung 52 des zweiten Ableitungsbereichs 32 ein. Ein erster Strömungswegbereich 54 umfasst eine Mehrzahl bohrungsartiger Kanäle 56, welche sich im Wesentlichen in der Richtung der Längsachse L erstrecken und eine Verbindung zwischen der ersten Ventilkammer 44 und der zweiten Ventilkammer 46 herstellen. Man erkennt in Fig. 3, dass die Kanäle 56 ringartig um den Ventilschieber 40 herum angeordnet sind. Ein zweiter Strömungswegbereich 58 umfasst eine Mehrzahl von Kanälen 60, die, ebenso wie die Kanäle 56 des ersten Strömungswegbereichs 54, in einem ringartigen Muster um den Ventilschieber 40 herum angeordnet sind und eine Verbindung zwischen der zweiten Ventilkammer 46 und der dritten Ventilkammer 50 herstellen.

Die Kanäle 56 des ersten Strömungswegbereichs münden in die erste Ventilkammer 44 im Bereich einer ersten Ventilsitzfläche 62 ein. Diese erste Ventilsitzfläche 62 weist eine näherungsweise kegelstumpfartige Form auf. In Zuordnung zu dieser ersten Ventilsitzfläche 62 weist der Ventilschieber 40 eine erste Ventilschieberfläche 64 mit entsprechender kegelstumpfartiger Formgebung auf.

Die Kanäle 60 des zweiten Strömungswegbereichs 58 münden in die dritte Ventilkammer 50 im Bereich einer zweiten Ventilsitzfläche 66 ein, welche ebenfalls eine im Wesentlichen kegelstumpfartige Formgebung aufweist. In Zuordnung zu dieser zweiten Ventilsitzfläche 66 weist der Ventilschieber 40 eine zweite Ventilschieberfläche 68 auf, die entsprechend der Formgebung der zweiten Ventilsitzfläche 66 ausgebildet ist und daher im dargestellten Beispiel ebenfalls eine kegelstumpfartige Form aufweist. Man erkennt, dass die erste Ventilsitzfläche 64 und die zweite Ventilsitzfläche 68 einander entgegengesetzt gerichtet bzw. orientiert sind.

Durch eine am Ventilkörper 38 sich abstützende Vorspannfeder 70 ist der Ventilschieber 40 in eine erste Betriebsstellung vorgespannt, in welcher, wie in Fig. 2 erkennbar, die Ventilschieberfläche 64 auf der Ventilsitzfläche 62 aufsitzt und somit die Kanäle 56 des ersten Strömungswegbereichs 54 abschließt. Auf Grund der Länge des Ventilschiebers 40 ist in dieser ersten Betriebsstellung die zweite Ventilschieberfläche 68 von der zweiten Ventilsitzfläche 66 abgehoben.

Die mit Bezug auf die Fig. 1 bereits angesprochene Temperaturfühleranordnung 36 weist eine Kammer 72 auf. In dieser Kammer 72 ist ein Medium mit temperaturabhängigem Volumen aufgenommen. Dies kann beispielsweise ein gasartiges Medium sein. An einem Endbereich ist die Kammer 72 durch ein elastisches Abschlusselement 74 zu einem Kanalbereich 76 hin abgeschlossen. Das beispielsweise auch membranartig ausgebildete Abschlusselement 74 kann aus Gummimaterial o. dgl. gebildet sein, so dass durch Einsetzen dieses Abschlusselements 74 in eine entsprechende Einsenkung 78 gleichzeitig ein im Wesentlichen dichter Abschluss der Kammer 72 erhalten wird. In dem Kanalbereich 76 ist ein Stössel 80 vorgesehen, welcher zusammen mit dem Abschlusselement 74 im Wesentlichen eine Übertragungsanordnung 82 bildet. Durch diese Übertragungsanordnung 82 werden, wie im Folgenden beschrieben, temperaturbedingte Volumenänderungen des in der Kammer 72 enthaltenen Mediums als Verstellbewegungen auf den Ventilschieber 40 übertragen. Durch die Beaufschlagungswirkung der Feder 70 einerseits und des im Allgemeinen unter Druck stehenden Mediums in der Kammer 72 andererseits, ist die den Ventilschieber 40, den Stössel 80 und das elastische Abschlusselement 74 umfassende Baugruppe in allen Betriebsphasen in im Wesentlichen festem gegenseitigen Anlagezustand gehalten.

Es sei zunächst angenommen, dass das Heizsystem 10 nicht in Betrieb ist und dass das in der Kammer 72 enthaltene und im Bereich des Glühzündstifts 32 positionierte Medium ein vergleichsweise geringes Volumen beansprucht. Durch die Vorspannwirkung der Feder 70 ist der Ventilschieber 40 in seine vorangehend bereits beschriebene erste Betriebsstellung bewegt, in welcher auf Grund des Abschlusses des ersten Strömungswegbereichs 54 der Zuleitungsbereich 20 keine Verbindung mit den beiden Ableitungsbereichen 24, 32 hat. Es kann somit über keinen der Zuleitungsbereiche Kraftstoff in die Brennkammer 28 einströmen. Der Leitungsbereich, in welchem ggf. noch Kraftstoff zur nach Einstellung eines Verbrennungsbetriebs möglichen Abdampfung vorhanden ist, ist im Wesentlichen auf die Länge der beiden Leitungen 26, 34 beschränkt.

Wird nun das Heizsystem 10 in Betrieb genommen, so wird zunächst der Glühzündstift 31 erhitzt. Die Temperatur steigt daraufhin in der Umgebung des Glühzündstifts 31 stark an, mit der Folge, dass das in der Kammer 72 enthaltene Medium versucht, sein Volmen zu vergrößern. Der Druck in der Kammer 72 wird ansteigen, und das elastische Abschlusselement 74 wird unter der Einwirkung dieses Drucks sich derart verformen, dass es weiter in den Kanalbereich 76 hineinragt. Infolgedessen wird auch der Stössel 80 verschoben. Dabei beaufschlagt der Stössel 80 den Ventilschieber 40, welcher nunmehr bei dieser vergleichsweise hohen Temperatur im Bereich der Temperaturfühleranordnung 36, d.h. im Bereich des Glühzündstifts 31, mit seiner zweiten Ventilschieberfläche 68 auf der zweiten Ventilsitzfläche 66 aufsitzen wird. In dieser während des Zündvorgangs eingenommenen zweiten Betriebsstellung des Kraftstoffventils 22 liegt dann die erste Ventilschieberfläche 64 nicht mehr auf der ersten Ventilsitzfläche 62 auf. Der erste Strömungswegbereich 54 ist somit freigegeben, und es besteht nunmehr eine Verbindung zwischen der ersten Ventilkammer 44 und der zweiten Ventilkammer 46. Da die zweite Ventilschieberfläche 68 auf der zweiten Ventilsitzfläche 66 aufsitzt, ist der zweite Strömungswegbereich 58 nunmehr blockiert, so dass keine Verbindung zwischen der zweiten Ventilkammer 46 und der dritten Ventilkammer 50 besteht. Der von der Dosierpumpe 16 zum Kraftstoffventil 20 geleitete Kraftstoff wird nunmehr durch die Einlassöffnung 42 des Zuleitungsbereichs 20, die erste Ventilkammer 44 und die Kanäle 56 des ersten Strömungswegbereichs 54 in die zweite Ventilkammer 46 strömen und von dieser über die Auslassöffnung 48 des ersten Ableitungsbereichs 24 und die in Fig. 1 erkennbare Leitung 26 in die Brennkammer 28 abgegeben. In diesem Zustand, in welchem die Zündung beginnen soll und der Heizbrenner 30 auf Nennleistung hochgefahren werden soll, wird also der Kraftstoff nahe dem Glühzündstift 31 in die Brennkammer 28 eingeleitet, so dass die Verbrennung sehr schnell starten kann.

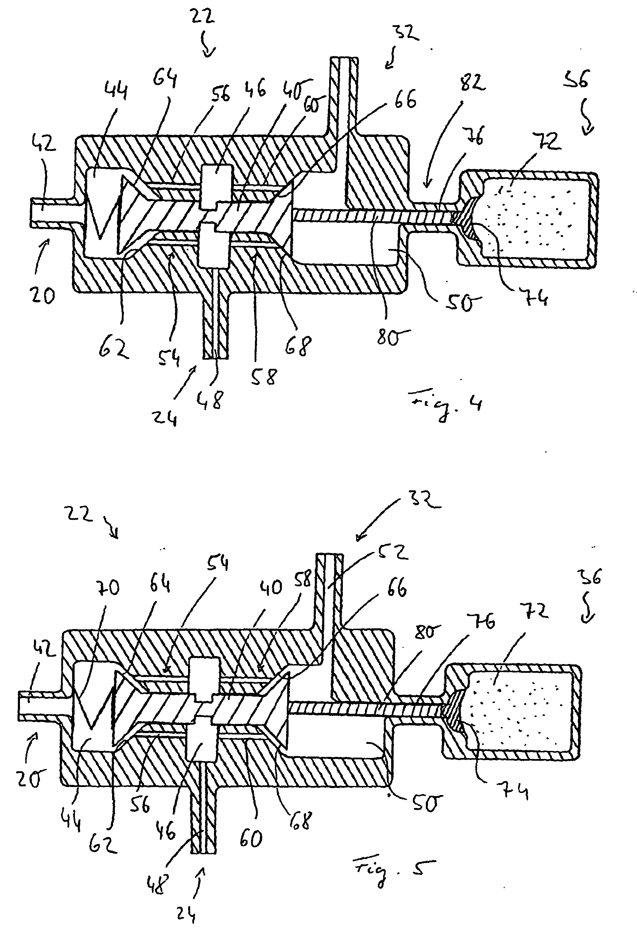

Nachdem im Wesentlichen die Nennleistung erreicht ist und die Verbrennung sich über einen größeren bzw. den gesamten Volumenbereich der Brennkammer 28 ausgebreitet hat, wird die Bestromung des Glühzündstifts 31 eingestellt. Die Temperatur im Bereich dieses Glühzündstifts 31 nimmt wieder ab, bleibt jedoch auf Grund der in der Brennkammer 28 ablaufenden Verbrennung höher als in einem Zustand, in welchem das Heizsystem 10 völlig außer Betrieb ist. Auf Grund der Abnahme der Temperatur im Bereich des Glühzündstifts 31 wird auch die Temperatur des in der Kammer 72 eingeschlossenen Mediums wieder abnehmen, was zu einem entsprechenden Rückgang des Innendrucks in der Kammer 72 führen wird. Durch die Vorspannwirkung der Feder 70 wird auf Grund des gesunkenen Drucks in der Kammer 72 nunmehr der Ventilschieber 40 sich zusammen mit dem Stössel 80 ausgehend von der in Fig. 4 dargestellten zweiten Betriebsstellung zu einer der in Fig. 5 dargestellten Betriebsstellung bewegen, in welcher ein Kräftegleichgewicht zwischen der Federkraft der Feder 70 und der Druckkraft des in der Kammer 72 eingeschlossenen Mediums vorhanden ist. Man erkennt, dass durch die Druckabnahme das elastische Abschlusselement 74 sich wieder weiter aus dem Kanalbereich 76 herausbewegt hat. In dieser dritten Betriebsstellung sind beide Ventilschieberflächen 64, 68 in Abstand zu den jeweils zugeordneten Ventilsitzflächen 62, 66 positioniert. Es sind daher beide Strömungswegbereiche 54, 58 freigegeben. Die erste Ventilkammer 44 ist daher durch den ersten Strömungswegbereich 54 in Verbindung mit der zweiten Ventilkammer 46, welche wiederum durch den zweiten Strömungwegbereich 58 in Verbindung mit der dritten Ventilkammer 50 ist. Der durch die Einlassöffnung 42 des Zuleitungsbereichs 20 unter Druck eingespeiste Kraftstoff wird nach dem Durchströmen der ersten Ventilkammer 44 durch die Kanäle 56 des ersten Strömungswegbereichs 54 in die zweite Ventilkammer 46 gelangen. Vor dort wird der Kraftstoff zum einen durch die Auslassöffnung 48 des ersten Ableitungsbereichs 24 abströmen und wird zum anderen durch die Kanäle 60 des zweiten Strömungswegbereichs 58 in die dritte Ventilkammer 50 gelangen, aus welcher er durch die Auslassöffnung 52 des zweiten Ableitungsbereichs 32 abströmen wird. In diesem normalen Verbrennungszustand wird also über beide Ableitungsbereiche 24, 32 und somit die beiden in Fig. 1 erkennbaren Leitungen 26, 34 der Kraftstoff in die Brennkammer 28 eingeleitet. Auf Grund dessen wird durch die beiden Einleitungsstellen bereits eine bessere Verteilung des zum Verbrennen zur Verfügung gestellten Kraftstoffs erlangt. Des Weiteren kann vorgesehen sein, dass die im normalen Verbrennungsbetrieb zusätzlich zur Kraftstoffeinleitung wirksame Leitung 34 in einen für diese normale Verbrennung optimalen Bereich führt. Man erkennt in den Figuren weiter, dass der zweite Ableitungsbereich 32 mit größerem Strömungsquerschnitt ausgebildet ist, als der erste Ableitungsbereich 24. Auf Grund des somit geringeren Strömungswiderstandes beim zweiten Ableitungsbereich 32 wird im normalen Verbrennungsbetrieb der größere Teil des Kraftstoffs über die Leitung 34 in die Brennkammer 28 eingeleitet, was zusammen mit der Auswahl des Einleitungsbereichs zu einer weiter verbesserten Verbrennung führt. Es sei darauf hingewiesen, dass selbstverständlich die Aufteilung der beiden Kraftstoffströme auch durch in anderen Bereichen liegende Drosselstellen bewirkt werden kann.

Beispielsweise hat die Auswahl der Gesamtquerschnittsfläche der Kanäle 60 des zweiten Strömungswegbereichs 58 bereits eine gewisse Drosselfunktion. Auch können in den Leitungen 26, 34 jeweils Drosselelemente vorgesehen sein, die im Sinne der vorliegenden Erfindung, ebenso wie im Ventilkörper 38 vorgesehene Drosselstellen, dann den jeweiligen Ableitungsbereichen 24 bzw. 52 funktional zuzuordnen sind, da sie im Wesentlichen bewirken, dass, je nach Einstellung der Drosselverhältnisse, über einen der Ableitungsbereiche eine größere Kraftstoffmenge abströmen wird als über den anderen der Ableitungsbereiche.

Durch den Einsatz des erfindungsgemäßen temperaturgesteuerten Kraftstoffventils wird also erreicht, dass das ungewünschte Abdampfen von nicht mehr verbranntem Kraftstoff bei Einstellung des Verbrennungsbetriebs auf Grund der Verringerung des Volumens des zum Abdampfen vorhandenen Kraftstoffs deutlich abnimmt. Des Weiteren sorgt das erfindungsgemäß ausgebildete temperaturgesteuerte Kraftstoffventil dafür, dass in allen Betriebszuständen eine temperaturangepasste Verteilung der Kraftstoffeinleitung stattfinden kann, wobei man insbesondere erkennt, dass beim Übergang von der in Fig. 4 dargestellten zweiten Betriebsstellung, welche dem Zündbetrieb zugeordnet ist, zu der in Fig. 5 dargestellten dritten Betriebsstellung, welche dem normalen Verbrennungsbetrieb zugeordnet ist, durch eine allmähliche und nicht sprunghafte Verlagerung des Ventilschiebers 40, einhergehend mit einer entsprechen allmählichen Temperaturänderung im Bereich des Glühzündstifts 31 ein entsprechend kontinuierlicher Übergang der Kraftstoffeinleitungsmengen, welche über die beiden Ableitungsbereiche 24, 32 fließen, erlangt wird.

Es sei abschließend noch darauf hingewiesen, dass das in den Figuren gezeigte Kraftstoffventil vereinfacht dargestellt ist. Es ist selbstverständlich möglich, dass der Ventilkörper und die Temperaturfühleranordnung aus mehreren Komponenten zusammengesetzt sind. Ebenso ist es möglich, dass beispielsweise am Ventilschieber in seinen abdichtend wirksam werdenden Flächen Dichtorgane, beispielsweise kraftstoffresistente Gummidichtungen, vorhanden sind. Auch ist die Positionierung der Temperaturfühleranordnung in Zuordnung zum Ventilkörper nur beispielhaft. Es ist selbstverständlich, dass eine andere Lagezuordnung, je nach Ausgestaltung des Heizbrenners, vorgesehen sein kann und ggf. auch der Stössel 80 in Form einer Bowdenzugseele ausgebildet sein könnte. Auch könnte die Druckänderung des in der Temperaturfühleranordnung vorhandenen Mediums unmittelbar, also ohne Zwischenschaltung irgendwelcher mechanischer Komponenten, direkt auf den dann in einem Endbereich kolbenartig ausgebildeten Ventilschieber übertragen werden.

## Patentansprüche

1. Temperaturgesteuertes Kraftstoffventil für einen kraftstoffbetriebenen Heizbrenner eines Fahrzeugheizsystems mit wenigstens einem in Abhängigkeit von einer Temperatur im Bereich des Heizbrenners (30) verstellbaren Ventilorgan (40) und einem Ventilkörper (38). in dem ein mit einem Zuleitungsbereich (20) In Verbindung bringbarer erster Strömungswegberelch (54) vorgesehen ist weicher zu einem Leitungsbereich (24) und über einen zweiten Strömungswegbereich (58) zu einem weiteren Leitungsbereich (32) führt,
wobei das Ventilorgan (40) bei einer ersten Temperatur den ersten Strömungswegereich (54) abschließt und bei einer über der ersten Temperatur liegenden zweiten Temperatur den ersten Strömungswegbareich (54) freigibt, um den ersten Strömungswegbereich (54) mit dem Zuleitungsbereich (20) In Verbindung zu bringen, wobei
der dem ersten Strömungswegbereich (54) zugeordnete Leitungsbereich (24) ein erster Ableitungsbereich (24) und der dem zweiten Strömungswegbereich (58) zugeordnete Leitungsbereich (32) ein zweiter Ableitungsbereich (32) ist,
das Ventilorgan (40) bei der zweiten Temperatur den zweiten Strömungswegbereich (58) freigibt und
das Ventilorgan (40) bei einer über der zweiten Temperatur liegenden dritten Temperatur den zweiten Strömungswegbereich (58) abschließt und den ersten Strömungswegbereich (54) freigibt.

2. Kraftstoffventil nach Anspruch 1,
**dadurch gekennzeichnet, dass** das Ventilorgan (40) eine erste Ventilorganfläche (64) und eine der ersten Ventilorganfläche (64) entgegengesetzt gerichtete zweite Ventilorganfläche (68) aufweist und dass in dem Ventilkörper (38) für die erste Ventilorganfläche (64) und die zweite Ventilorganfläche (68) eine erste Ventilsitzfläche (62) bzw. eine zweite Ventilsitzfläche (66) vorgesehen sind, wobei der erste Strömungswegbereich (54) in die erste Ventilsitzfläche (62) einmündet und der zweite Strömungswegbereich (58) in die zweite Ventilsitzfläche (66) einmündet.

3. Kraftstoffventil nach Anspruch 2,
**dadurch gekennzeichnet, dass** bei auf der ersten Ventilsitzfläche (62) aufsitzender erster Ventilorganfläche (64) die zweite Ventilorganfläche (68) nicht auf der zweiten Ventilsitzfläche (66) aufsitzt.

4. Kraftstoffventil nach einem der Ansprüche 1 bis 3,
**gekennzeichnet durch** eine Temperaturfühleranordnung (36) mit einem Temperaturfühlermedium mittemperaturabhängigem Volumen und einer **durch** Volumenänderung des Temperaturfühlermediums verlagerbaren und das Ventilorgan (40) beaufschlagenden Übertragungsanordnung (82).

5. Kraftstoffventil nach Anspruch 4,
**dadurch gekennzeichnet, dass** die Übertragungsanordnung (82) ein durch Volumenänderung des Temperaturfühlermediums verformbares Abschlusselement (74) und einen durch Abschlusselementenverformung verlagerbaren Stössel (80) umfasst. 5

6. Heizsystem, insbesondere für ein Fahrzeug, umfassend einen Heizbrenner (30) mit einer Brennkammer (28), eine Pumpanordnung (16) zum Fördern von Kraftstoff zur Brennkammer (28) sowie ein temperaturgesteuertes Kraftstoffventil (22) nach einem der vorangehenden Ansprüche im Strömungsweg zwischen der Pumpanordnung (16) und der Brennkammer (28).

7. Heizsystem nach Anspruch 6,
**dadurch gekennzeichnet, dass** eine Temperaturfühleranordnung (36) des Kraftstoffventils (22) zum Erfassen einer Temperatur im Bereich eines Zündorgans (31) des Heizbrenners (30) oder im Bereich eines Abgasstroms ausgebildet ist.

8. Heizsystem nach Anspruch 6 oder Anspruch 7,
**dadurch gekennzeichnet, dass** über den ersten Ableitungsbereich (24) des Kraftstoffventils (22) Kraftstoff in die Brennkammer (28) im Bereich des Zündorgans (31) einleitbar ist und über den zweiten Ableitungsbereich (32) des Kraftstoffventils (22) Kraftstoff in die Brennkammer (28) in einem vom Zündorgan (32) weiter entfernt liegenden Bereich einleitbar ist.

9. Heizsystem nach Anspruch 8,
**dadurch gekennzeichnet, dass** der zweite, Ableitungsbereich (32) einen geringeren Strömungswiderstand bereitstellt, als der erste Ableitungsbereich (24).

## Claims

1. Temperature-controlled fuel valve for a fuel combustion type heater of a vehicle heating system having at least one valve member (40), which can be adjusted as a function of a temperature in the region of the heater (30), and a valve body (38), in which a first flow path region (54) which can be brought into connection with a feed line region (20) is provided, which flow path region leads to a line region (24) and via a second flow path region (58) to a further line region (32), the valve member (40) closing off the first flow path region (54) at a first temperature and opening up the first flow path region (54) at a second temperature above said first temperature in order to bring the first flow path region (54) into connection with the feed line region (20), the line region (24) assigned to the first flow path region (54) being a first removal line region (24) and the line region (32) assigned to the second flow path region (58) being a second removal line region (32), the valve member (40) opening up the second flow path region (58) at the second temperature, the valve member (40) closing off the second flow path region (58) and opening up the first flow path region (54) at a third temperature above said second temperature.

2. Fuel valve according to Claim 1,
**characterized in that** the valve member (40) has a first valve member surface (64) and a second valve member surface (68) directed in an opposed manner to the first valve member surface (64), and **in that** in the valve body (38) for the first valve member surface (64) and the second valve member surface (68) a first valve seat surface (62) and a second valve seat surface (66), respectively, are provided, the first flow path region (54) opening into the first valve seat surface (62) and the second flow path region (58) opening into the second valve seat surface (66).

3. Fuel valve according to Claim 2, **characterized in that**, with the first valve member surface (64) seated on the first valve seat surface (62), the second valve member surface (68) is not seated on the second valve seat surface (66).

4. Fuel valve according to one of Claims 1 to 3, **characterized by** a temperature sensor arrangement (36) having a temperature sensor medium with a temperature-dependent volume and a transmission arrangement (82) which can be displaced by a change in volume of the temperature sensor medium and acts upon the valve member (40).

5. Fuel valve according to Claim 4, **characterized in that** the transmission arrangement (82) comprises a closure element (74) which can be deformed by a change in volume of the temperature sensor medium, and comprises a tappet (80) which can be displaced by deformation of the closure element.

6. Heating system, in particular for a vehicle, comprising a heater (30) having a combustion chamber (28), a pump arrangement (16) for feeding fuel to the combustion chamber (28) and a temperature-controlled fuel valve (22) according to one of the preceding claims in the flow path between the pump arrangement (16) and the combustion chamber (28).

7. Heating system according to Claim 6, **characterized in that** a temperature sensor arrangement (36) of the fuel valve (22) is designed for detecting a temperature in the region of an ignition member (31) of the heater (30) or in the region of an exhaust flow.

8. Heating system according to Claim 6 or Claim 7, **characterized in that** fuel can be conducted into the combustion chamber (28) in the region of the ignition member (31) via the first removal line region (24) of the fuel valve (22) and fuel can be conducted into the combustion chamber (28) in a region situated further away from the ignition member (31) via the second removal line region (32) of the fuel valve (22).

9. Heating system according to Claim 8, **characterized in that** the second removal line region (32) provides a lower flow resistance than the first removal line region (24).

## Revendications

1. Soupape de carburant à régulation thermique pour brûleur à carburant d'un système de chauffage de véhicule comprenant au moins un organe de soupape (40) réglable en fonction d'une température dans la région du brûleur (30) et un corps de soupape (38), dans lequel est prévue une première région de chemin d'écoulement (54) pouvant être amenée en liaison avec une région de conduite d'amenée (20) et conduisant à une région de conduite (24), et, par le biais d'une deuxième région de chemin d'écoulement (58), à une région de conduite supplémentaire (32), l'organe de soupape (40) fermant la première région de chemin d'écoulement (54) à une première température, et libérant la première région de chemin d'écoulement (54) à une deuxième température supérieure à ladite première température, afin d'amener la première région de chemin d'écoulement (54) en liaison avec la région de conduite d'amenée (20),
la région de conduite (24) associée à la première région de chemin d'écoulement (54) étant une première région de dérivation (24) et la région de conduite (32) associée a la deuxième région de chemin d'écoulement (58) étant une deuxième région de dérivation (32), l'organe de soupape (40) libérant la deuxième région de chemin d'écoulement (58) à la deuxième température et l'organe de soupape (40) fermant la deuxième région de chemin d'écoulement (58) et libérant la première région de chemin d'écoulement (54) à une troisième température supérieure à ladite deuxième température.

2. Soupape de carburant selon la revendication 1,
**caractérisée en ce que** l'organe de soupape (40) présente une première surface d'organe de soupape (64) et une deuxième surface d'organe de soupape (68) orientée à l'opposé de la première surface d'organe de soupape (64), et **en ce que** l'on prévoit dans le corps de soupape (38) une première surface de siège de soupape (62) pour la première surface d'organe de soupape (64) et une deuxième surface de siège de soupape (66) pour la deuxième surface d'organe de soupape (68), la première région de chemin d'écoulement (54) débouchant dans la première surface de siège de soupape (62) et la deuxième région de chemin d'écoulement (58) débouchant dans la deuxième surface de siège de soupape (66).

3. Soupape de carburant selon la revendication 2,
**caractérisée en ce que**, lorsque la première surface d'organe de soupape (64) repose sur la première surface de siège de soupape (62), la deuxième surface d'organe de soupape (68) ne repose pas sur la deuxième surface de siège de soupape (66).

4. Soupape de carburant selon l'une quelconque des revendications 1 à 3,
**caractérisée par** un agencement de capteur de température (36) avec un milieu de capteur de température de volume variable en fonction de la température et avec un agencement de transfert (82) déplaçable sous l'effet de la variation de volume du milieu de capteur de température et sollicitant l'organe de soupape (40).

5. Soupape de carburant selon la revendication 4,
**caractérisée en ce que** l'agencement de transfert (82) comprend un élément de fermeture (74) déformable sous l'effet de la variation de volume du milieu de capteur de température et une tige-poussoir (80) déplaçable sous l'effet de la déformation de l'élément de fermeture.

6. Système de chauffage, notamment pour un véhicule, comprenant un brûleur (30) avec une chambre de combustion (28), un agencement de pompe (16) pour refouler du carburant vers la chambre de combustion (28) ainsi qu'une soupape de carburant (22) à régulation thermique selon l'une quelconque des revendications précédentes dans le chemin d'écoulement entre l'agencement de pompe (16) et la chambre de combustion (28).

7. Système de chauffage selon la revendication 6,
**caractérisée en ce qu'**un agencement de capteur de température (36) de la soupape de carburant (22) est réalisé pour détecter une température dans la région d'un organe d'allumage (31) du brûleur (30) ou dans la région d'un courant de gaz d'échappement.

8. Système de chauffage selon la revendication 6 ou la revendication 7,
**caractérisée en ce que** du carburant peut être introduit dans la chambre de combustion (28) dans la région de l'organe d'allumage (31) par le biais de la première région de dérivation (24) de la soupape de carburant (22) et du carburant peut être introduit dans la chambre de combustion (28) dans une région plus éloignée de l'organe d'allumage (31) par le biais de la deuxième région de dérivation (32) de la soupape de carburant (22).

9. Système de chauffage selon la revendication 8,
**caractérisée en ce que** la deuxième région de dérivation (32) fournit une résistance à l'écoulement plus faible que la première région de dérivation (24).
